# EUROPÄISCHE PATENTSCHRIFT

(11) **EP 3 584 034 B1**
(45) Veröffentlichungstag und Bekanntmachung des Hinweises auf die Patenterteilung: **16.12.2020**
(21) Anmeldenummer: 19173978.8
(22) Anmeldetag: 13.05.2019
(51) Int. Cl.: B23Q 3/18, B23Q 7/04, B27B 5/06, B27B 31/00, B27M 1/08

(54) **PLATTENEINSCHUBSYSTEM FÜR HOLZVERARBEITUNGSMASCHINEN**
PLATE INSERTION SYSTEM FOR WOOD PROCESSING MACHINES
SYSTÈME D'INSERTION DE PLAQUES POUR MACHINES DE TRAITEMENT DU BOIS

(30) Priorität: 28.05.2018 DE 102018112675
(43) Veröffentlichungstag der Anmeldung: 25.12.2019
(73) Patentinhaber: IMA Schelling Deutschland GmbH, 32312 Lübbecke (DE)
(72) Erfinder: Ober-Sundermeyer, Heinz-Dieter, 32429 Minden (DE); Hielscher, Ulrich, 32312 Lübbecke (DE); Seifert, Uwe, 32361 Preußisch Oldendorf (DE)
(74) Vertreter: Schober, Mirko

(56) Entgegenhaltungen:
- EP-A1- 1 362 676
- DE-A1-102005 040 063

## Beschreibung

Die Erfindung betrifft ein Platteneinschubsystem für Holzverarbeitungsmaschinen, welches dazu ausgelegt ist, plattenförmige Werkstücke aus Holz oder Holzersatzstoffen in eine Holzverarbeitungsmaschine einzuschieben.

Plattenförmige Werkstücke aus Holz oder Holzersatzstoffen werden vor ihrer Bearbeitung in einer Holzverarbeitungsmaschine in der Regel über ein Platteneinschubsystem der Holzverarbeitungsmaschine zugeführt.

Das Einschubsystem verfügt dabei über Werkstückerfassungseinrichtungen, die in Form von Greifern oder Klemmelementen ein betreffendes Werkstück erfassen und in einer definierten Ausrichtung in die Holzverarbeitungsmaschine einschieben.

Die zu bearbeitenden Werkstücke kommen in der Regel in einem bestimmten Format vorgeschnitten im Einschubsystem an. Allerdings entsprechen die am einzuschiebenden Werkstück vorhandenen geometrischen Abmessungen zu diesem Zeitpunkt nicht den Abmessungen, die das Werkstück nach der Bearbeitung haben soll. Die Holzverarbeitungsmaschine hat daher die Aufgabe, die Werkstücke, insbesondere die Schmalseiten derselben, passend zu formatieren. Dies geschieht in der Regel über einen Fräsvorgang eingangs der Holzverarbeitungsmaschine unmittelbar nach dem Einschieben. Auch ist es oftmals so, dass die Werkstücke - wenn z.B. ein rechteckiges Werkstück vorliegt - nicht exakt rechtwinklig sind, sodass es erforderlich sein kann, das Werkstück durch das Formatieren in der Holzverarbeitungsmaschine erst rechtwinklig zu machen. Damit die Holzverarbeitungsmaschine eine entsprechende Formatierung vornehmen kann, muss das Platteneinschubsystem in der Lage sein, das plattenförmige Werkstück möglichst unabhängig von seiner Größe und Geometrie entsprechend präzise der Holzverarbeitungsmaschine zuzuführen.

Aus DE 10 2005 040 063 B4 ist ein Platteneinschubsystem bekannt geworden, mit welchem die eine Seite des Werkstücks über bewegliche Klemmelemente gehalten und quer zur Einschubrichtung gegen einen auf der anderen Seite befindlichen, als Gegenklemmeinrichtung ausgebildeten Anschlag gedrückt wird. In einer besonderen Ausführungsform handelt es sich dabei um ein in Einschubrichtung mitlaufendes Band. Auf diese Weise wird erreicht, dass das Werkstück immer mit der an der Gegenklemmeinrichtung anliegenden Schmalseite exakt parallel zur Einschubrichtung geführt wird.

Oftmals weisen die in die Platteneinschubsysteme eingebrachten Werkstücke, zumeist viereckige Werkstücke, vier von 90° leicht abweichende Eckwinkel auf. Folglich verlaufen die gegenüberliegenden Schmalseiten solcher Werkstücke auch nicht exakt parallel zueinander, sondern gewinkelt. Es kann daher für viele Anwendungsfälle von Vorteil sein, hinsichtlich der Orientierung des Werkstücks, insbesondere der Orientierung der der Holzverarbeitungsmaschine bzw. deren Bearbeitungsaggregaten beim Einschub zugewandten Schmalseite des Werkstücks, gewisse Freiheiten zu haben. So kann es sich anbieten, die den Bearbeitungsaggregaten zugewandte Schmalseite nicht exakt parallel zur Einschubrichtung zu orientieren, sondern in einem Winkel hierzu. Dies ist mit der bekannten Vorrichtung nicht möglich, da diese lediglich erlaubt, die den Bearbeitungsaggregaten zugewandte Schmalseite exakt parallel zur Einschubrichtung zu orientieren.

Der vorliegenden Erfindung liegt daher die Aufgabe zugrunde, ein Platteneinschubsystem der eingangs genannten Art anzugeben, bei welchem auch ein Einschieben möglich ist, bei dem die den Bearbeitungsaggregaten zugewandte Schmalseite in einem Winkel zur Einschubrichtung liegt.

Gelöst wird diese Aufgabe durch ein Platteneinschubsystem mit den Merkmalen des Anspruchs 1. Vorteilhafte Ausführungsformen finden sich in den Unteransprüchen.

Ein erfindungsgemäßes Platteneinschubsystem für Holzverarbeitungsmaschinen ist zum Einschieben von plattenförmigen Werkstücken aus Holz oder Holzersatzstoffen in eine Holzverarbeitungsmaschine ausgelegt. Dabei umfasst ein solches Platteneinschubsystem einen Werkstücktisch mit einer Werkstückablagefläche sowie eine Mehrzahl Werkstückerfassungseinrichtungen. Letztere sind wiederum dazu ausgelegt, das Werkstück zu fassen und auf dem Werkstücktisch in einer Einschubrichtung parallel zur Werkstückablage zu verschieben.

Gemäß der vorliegenden Erfindung sind wenigstens zwei der Mehrzahl Werkstückerfassungseinrichtungen als Klemmbacken mit jeweils zwei zueinander abgewinkelten Schenkelabschnitten ausgebildet. Jeder Schenkelabschnitt weist weiter einen Anlagebereich auf, der zur Anlage an die Schmalseite eines plattenförmigen Werkstücks ausgelegt ist. Die Klemmbacken sind dabei in Einschubrichtung verschieblich gelagert, wobei die wenigstens zwei Klemmbacken zusätzlich in eine Querrichtung quer, insbesondere senkrecht, zur Einschubrichtung und parallel zur Werkstückablage verschieblich sind. Die Klemmbacken lassen sich somit an den Ecken des Werkstücks positionieren und nach Anlage am Werkstück lässt sich das Werkstück durch Bewegen der Klemmbacken in Einschubrichtung einschieben. Durch relatives Bewegen der Klemmbacken quer zur Einschubrichtung kann zudem eine Drehung des Werkstücks erreicht werden, sodass das Einschieben in einem vorgebbaren Winkel zur Einschubrichtung erfolgen kann.

Dazu ist im erfindungsgemäßen Platteneinschubsystem über die wenigstens zwei Klemmbacken hinaus eine weitere, zumindest in Einschubrichtung verschiebliche, Werkstückerfassungseinrichtung vorgesehen. Diese weitere Werkstückerfassungseinrichtung ist dabei nach einer erfindungsgemäßen Ausführungsform ebenfalls als Klemmbacke mit jeweils zwei zueinander abgewinkelten Schenkelabschnitten ausgebildet, wobei auch hier jeder Schenkelabschnitt einen Anlagebereich aufweist, der zur Anlage an die Schmalseite des plattenförmigen Werkstücks ausgelegt ist. Alternativ oder ergänzend hierzu kann die weitere Werkstückerfassungseinrichtung einen Anlageabschnitt umfassen, der die Anlage einer Schmalseite des Werkstücks an die weitere Werkstückerfassungseinrichtung in einem Winkel zur Einschubrichtung ermöglicht.

Durch die erfindungsgemäße weitere Werkstückerfassungseinrichtung wird erreicht, dass die über die Klemmbacken fixierten Werkstücke gegen die weitere Werkstückerfassungseinrichtung angelegt werden. Die weitere Werkstückerfassungseinrichtung bildet also ein Widerlager, mit dessen Hilfe sich bei relativer Bewegung in Querrichtung die beiden übrigen Klemmbacken gegeneinander verschieben und das Werkstück somit drehen können. Die weitere Werkstückerfassungseinrichtung weist dazu einen Anlagebereich auf, der eine Drehung des Werkstücks begünstigt. So kann dieser Anlagebereich beispielsweise in Gestalt einer Wölbung oder einer konvexen Fläche ausgebildet sein, die eine Drehachse bzw. einen Drehpunkt für die Schmalseite des anliegenden Werkstücks bildet. Bevorzugt ist die weitere Werkstückerfassungseinrichtung als Klemmbacke ausgebildet, die auf der Außenseite von einem der Schenkel einen entsprechenden Anlagebereich aufweist.

Nach einer vorteilhaften Ausführungsform der vorliegenden Erfindung kann vorgesehen sein, dass eine erste Klemmbacke an einer in Einschubrichtung verschieblichen ersten, insbesondere als erstes Portal ausgebildeten, Verschiebeeinrichtung angeordnet ist. Insbesondere kann diese Klemmbacke an der ersten Verschiebeeinrichtung in einer Richtung quer zur Einschubrichtung verschieblich geführt sein. Die Anordnung an Portalen ist allerdings nicht zwingend erforderlich, wichtig ist, dass die Klemmbacke in wenigstens zwei Richtungen parallel zum Werkstücktisch verschieblich ist.

Ähnliches gilt für die wenigstens eine weitere Klemmbacke, welche nach einer bevorzugten Ausführungsform an der ersten Verschiebeeinrichtung oder einer von der ersten Verschiebeeinrichtung verschiedenen zweiten in Einschubrichtung verschieblichen, insbesondere als zweites Portal ausgebildeten, Verschiebeeinrichtung angeordnet ist. Auch hier kann die weitere Klemmbacke insbesondere an der zweiten Verschiebeeinrichtung in einer Richtung quer zur Einschubrichtung verschieblich geführt sein.

Natürlich können mehr als zwei Klemmbacken vorgesehen sein. Die Zahl der Klemmbacken ist im Grunde beliebig, beispielsweise bieten sich eine ganze Reihe von Klemmbacken an, wenn Werkstücke unterschiedlicher Größe eingeschoben werden sollen. Dies gestaltet das erfindungsgemäße Platteneinschubsystem dann flexibler. So kann beispielsweise vorgesehen sein, dass wenigstens eine weitere Klemmbacke an einer von der ersten Verschiebeeinrichtung und einer gegebenenfalls vorhandenen zweiten Verschiebeeinrichtung verschiedenen dritten in Einschubrichtung verschieblichen, insbesondere als drittes Portal ausgebildeten, Verschiebeeinrichtung angeordnet ist. Auch hier ist diese Klemmbacke insbesondere an der dritten Verschiebeeinrichtung in einer Richtung quer zur Einschubrichtung verschieblich geführt.

Bei im Regelfall viereckigen Werkstücken bietet es sich an, wenigstens vier Werkstückerfassungseinrichtungen in Gestalt von Klemmbacken vorzusehen, welche alle in Einschubrichtung und in einem Winkel, bevorzugt senkrecht, zur Einschubrichtung parallel zur Werkstückablage verschieblich ausgebildet sind.

Die wenigstens eine weitere Werkstückerfassungseinrichtung, die insbesondere als Klemmbacke ausgebildet ist, kann nach einer bevorzugten Ausführungsform der vorliegenden Erfindung als Klemmbacke an einer sich in Einschubrichtung erstreckenden Führungseinrichtung angeordnet und in Einschubrichtung verschieblich geführt sein. Damit auch diese Klemmbacke in zwei Raumrichtungen bewegt werden kann, ist die Führungseinrichtung in der Querrichtung bevorzugt verschieblich gelagert.

Wie oben bereits angesprochen, kann es sich empfehlen, die Zahl der verwendeten Klemmbacken in Hinblick auf große Werkstücke zu erhöhen. Nach einer bevorzugten Ausführungsform kann vorgesehen sein, dass eine Mehrzahl Klemmbacken an wenigstens einer der Verschiebeeinrichtungen und/oder der Führungseinrichtung angeordnet ist.

Auf diese Weise können die Klemmbacken auch bei sehr langen Werkstücken für die hinreichende Anlage und präzise Ausrichtung des Werkstücks sorgen.

Eine erfindungsgemäße Klemmbacke kann aus einem einfachen Winkelstück bestehen. Gerade bei der Drehung der Werkstücke führt allerdings ein normaler Winkel im Bereich der Ecke des Werkstücks zu unpräzisen Anlagen. Bevorzugt ist daher vorgesehen, dass der Anlagebereich am ersten und/oder zweiten Schenkelabschnitt von wenigstens einer Klemmbacke oder einer Mehrzahl Klemmbacken aus dem jeweiligen Schenkelabschnitt vorspringend ausgebildet ist. Diese Vorsprünge bilden dann eine fingerartige Anlage an die jeweiligen aneinander angrenzenden Schmalseiten des Werkstücks. Gerade bei einem Eckwinkel des Werkstücks, der nicht 90° beträgt, sorgen die Finger dafür, dass auch bei leicht gedrehtem Werkstück eine sichere 2-Punkt Anlage der Klemmbacke am Werkstück erfolgt. Der bevorzugt fingerartig ausgebildete vorspringende Anlagebereich ist daher an einer Klemmbacke vorteilhafter Weise zweimal vorgesehen. Bevorzugt weist also wenigstens eine Klemmbacke zwei zueinander in einem Winkel, insbesondere im rechten Winkel, angestellte fingerartige Anlagebereiche auf.

Gerade bei nicht rechtwinkligen Ecken oder gedrehten Werkstücken ist es von Vorteil, wenn der Anlagebereich am ersten und/oder zweiten Schenkelabschnitt der wenigstens einen Klemmbacke oder einer Mehrzahl Klemmbacken eine nicht ebene, insbesondere gewölbte, Werkstückkontaktfläche aufweist. Durch die Wölbung oder nicht ebene Ausgestaltung ist es möglich, bei in den Klemmbacken gehaltenem Werkstück die Ausrichtung der Klemmbacken gegenseitig noch leicht zu verändern. Dabei folgt das Werkstück den räumlichen Veränderungen der Klemmbacken, sodass Drehungen des Werkstücks auf diese Weise erreicht werden können, ohne dass das Werkstück den Halt in den Klemmbacken verliert.

Die Erfindung betrifft weiter eine Holzverarbeitungsanlage, mit einer Holzverarbeitungsmaschine, die Holzverarbeitungsmaschine kann insbesondere als Kantenbearbeitungsmaschine und weiter insbesondere als Durchlaufmaschine ausgebildet sein. Die erfindungsgemäße Holzverarbeitungsanlage weist weiter einen Werkstückeingangsbereich und ein dem Werkstückeingangsbereich vorgeschaltetes Platteneinschubsystem auf, wie es oben beschrieben worden ist.

Teil einer solchen Holzbearbeitungsanlage kann auch eine Fördervorrichtung sein, welche insbesondere ein Kettenband umfasst. Diese Fördervorrichtung fördert das Werkstück in Einschubrichtung und erstreckt sich über den Werkstücktisch wenigstens bis zum Werkstückeingangsbereich der Holzverarbeitungsmaschine oder bis in die Holzverarbeitungsmaschine hinein.

Der Werkstücktisch, bzw. die Werkstückauflage, kann auf unterschiedliche Art und Weise ausgebildet sein. Bevorzugt wird das von den Werkstückerfassungseinrichtungen bzw. Klemmbacken gehaltene Werkstück über eine am Werkstücktisch vorhandene Luftkissen- oder Bürsteneinrichtung geführt, um einen möglichst reibungsfreien Einschub bzw. eine möglichst reibungsfreie Manipulation des Werkstücks zu ermöglichen.

Die Erfindung wird nachfolgend anhand der Figuren 1 bis 3C näher erläutert.

Figur 1 zeigt eine Draufsicht auf eine beispielhafte Holzverarbeitungsanlage, die eine Anordnung eines erfindungsgemäßen Platteneinschubsystems und einer Holzverarbeitungsmaschine umfasst.

Die Figuren 2A bis 2D zeigen unterschiedliche Anlagesituationen einer Werkstückecke an einer erfindungsgemäßen Klemmbacke.

Die Figuren 3A bis 3C zeigen eine besondere Ausführungsform der erfindungsgemäßen weiteren Werkstückerfassungseinrichtung in Gestalt einer Klemmbacke mit speziellem Anlagebereich.

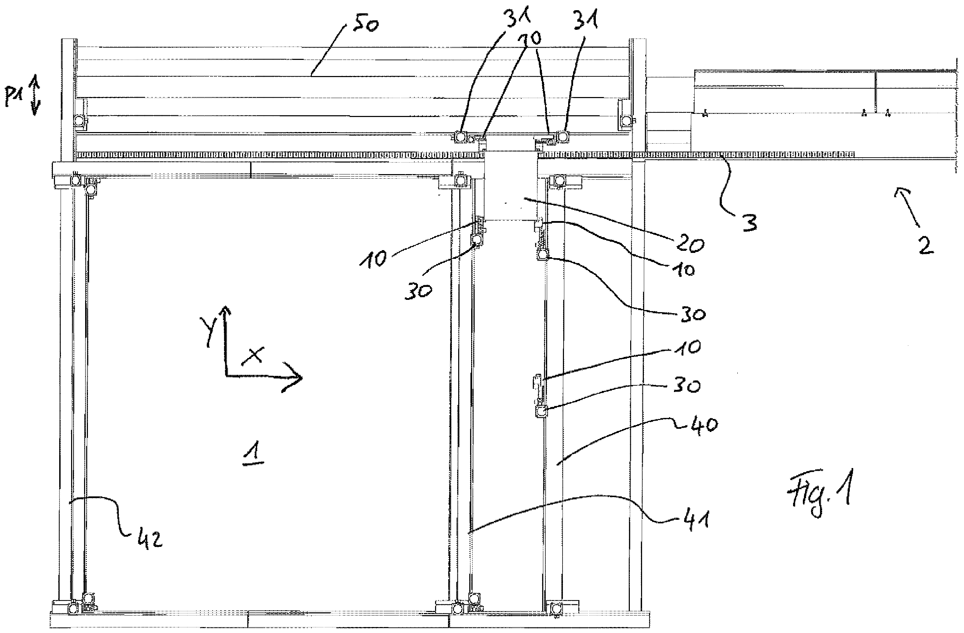

Bei der in Figur 1 gezeigten Anordnung findet sich ein Einschubsystem für plattenförmige Werkstücke, welches über einen Werkstücktisch 1 verfügt, welcher eine Werkstückablage aufweist. Über den Werkstücktisch 1 verschieblich angeordnet sind eine ganze Reihe von Klemmbacken 10, die das Werkstück 20 erfassen können. Im gezeigten Beispiel verfügt jede Klemmbacke 10 über einen eigenen Antrieb 30, 31, insbesondere Servoantrieb, mit welchem die Klemmbacke in wenigstens eine Richtung verschoben werden kann. Die Richtung X zeigt die Einschubrichtung, in welcher das Werkstück 20 in die durch das Bezugszeichen 2 angedeutete Holzverarbeitungsmaschine eingeschoben werden kann. Zur Unterstützung des Transports dient ein Kettenband 3, welches sich im gezeigten Beispiel vom Werkstücktisch 1 bis in die Holzverarbeitungsmaschine 2 erstreckt. Für die größere Flexibilität bei der Handhabung von Werkstücken 20 unterschiedlicher Größe sind wenigstens einige der Klemmbacken 10 an Portalen 40, 41, 42 angeordnet. Die Klemmbacken müssen jedoch nicht an Portalen angeordnet sein. Jedes der gezeigten Portale ist in Einschubrichtung X verschieblich angeordnet, die daran positionierten Klemmbacken 10 sind ihrerseits am Portal in Richtung Y quer zur Einschubrichtung und parallel zum Werkstücktisch 1 bzw. dessen Ablagefläche verschieblich. Dadurch lassen sich die Klemmbacken 10 sowohl in Einschubrichtung X als auch in der Richtung Y quer dazu verschieben. In der gezeigten Variante ist jenseits des Kettenbandes 3, d.h. auf der dem Werkstücktisch 1 abgewandten Seite des Kettenbandes 3, ein Support 50 angeordnet, an welchem sich wenigstens eine, bevorzugt zwei, weitere Klemmbacken 10 befinden, die sich am Support 50 in Einschubrichtung X verschieben lassen. Der Support 50 selbst kann optional verschieblich in Richtung Y vorgesehen sein, wie dies durch den Pfeil P1 angedeutet ist.

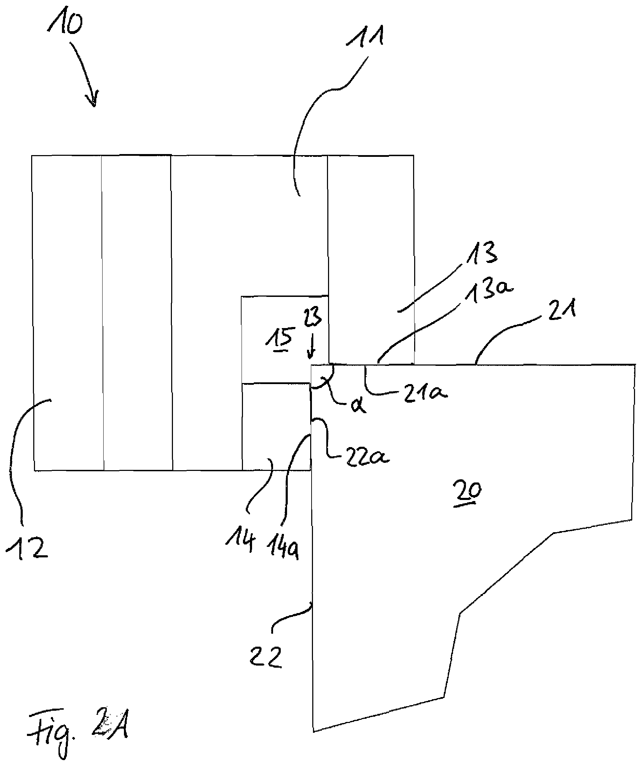

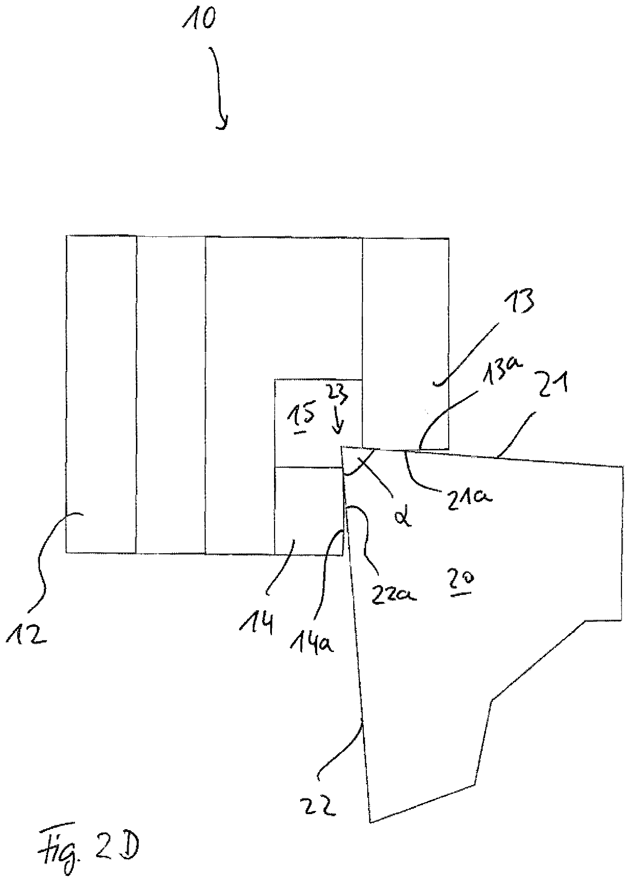

Erfindungsgemäß wird nun ein Werkstück 20 auf dem Werkstücktisch 1 abgelegt, sodann wird eine Mehrzahl Klemmbacken 10 am Werkstück 20 zur Anlage gebracht. Bevorzugt geschieht dies an den Werkstückecken, wie dies beispielhaft in den Figuren 2A bis 2D gezeigt ist.

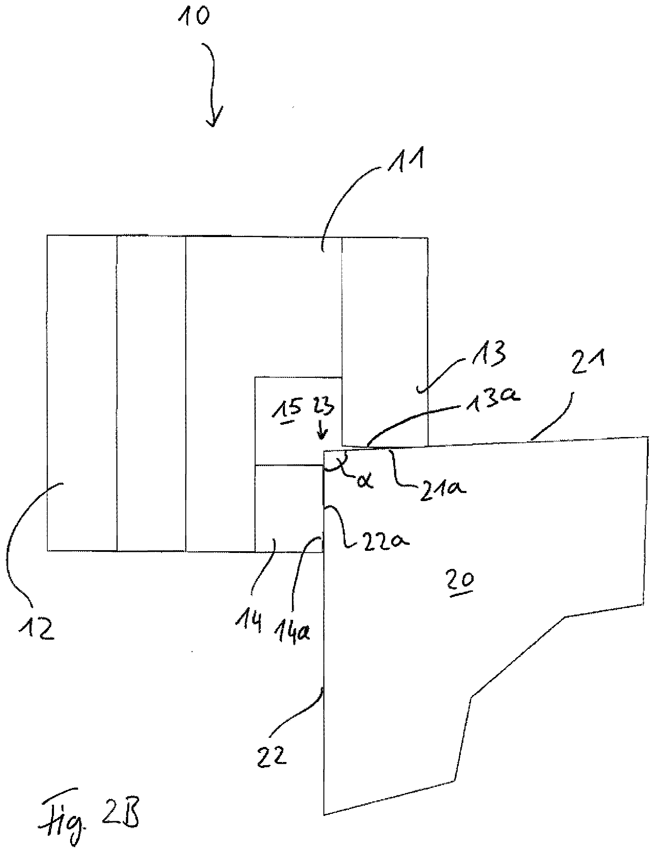

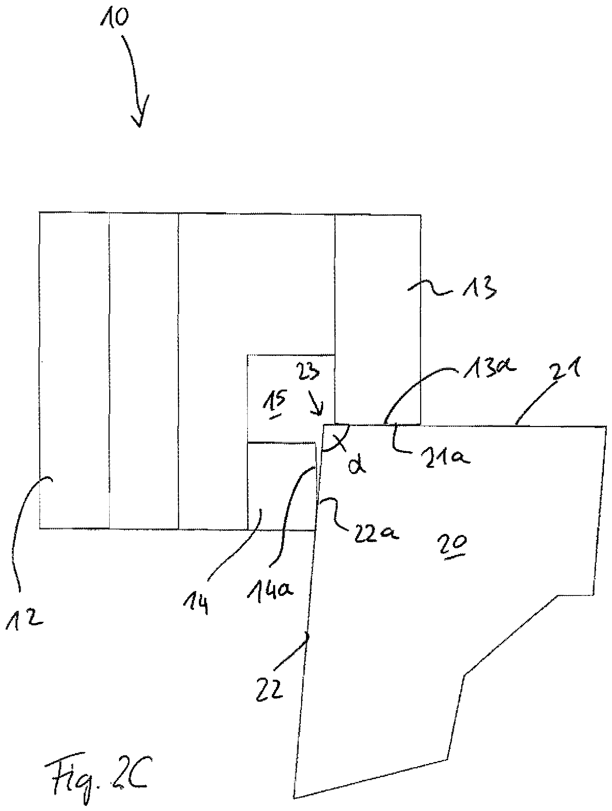

Eine erfindungsgemäße Klemmbacke weist zwei Schenkelabschnitte 11, 12 auf, welche im gezeigten Beispiel der Figur 2A bevorzugt in einem rechten Winkel zueinander angeordnet sind. Dies muss jedoch nicht zwingend ein rechter Winkel sein. An den jeweiligen Schenkelabschnitten 11, 12 sind entsprechende, in den Bereich des Innenwinkels der Schenkelabschnitte vorspringende Vorsprünge 13 bzw. 14 angeordnet. Diese fingerartigen Vorsprünge weisen Anlagebereiche 13a bzw. 14a auf, die vorteilhafter Weise - wie im gezeigten Beispiel - eine zum Werkstück 20 hin konvex ausgebildete Wölbung aufweisen. Mit diesen Anlagebereichen 13a bzw. 14a kann die Klemmbacke 10 an aneinander angrenzenden Schmalseiten 21 bzw. 22 des Werkstücks 20 in den Bereichen 21a bzw. 22a anliegen. Über die nicht ebenen Anlagebereiche 13a bzw. 14a ist eine Drehung des Werkstücks 20 relativ zur Klemmbacke 10 möglich, ohne dass die Klemmbacke 10 aus dem Eingriff mit dem Werkstück 20 gelöst wird. Im gezeigten Beispiel liegt ein Werkstück 20 mit einer rechtwinkligen Ecke (Winkel α gleich 90°) vor, der von beiden Vorsprüngen 13 bzw. 14 gleichmäßig gehalten wird. Die Ecke 23 reicht dabei in einen zwischen den Vorsprüngen 13 bzw. 14 und den Schenkeln 11, 12 der Klemmbacke 10 gebildeten Freiraum 15 hinein. Auch eine Drehung des Werkstücks 20 (Figur 2B) führt nicht aus dem sicheren Halt der Ecke 23 des Werkstücks in der Klemmbacke 10 hinaus. Wie man insbesondere aus Figur 2C erkennt, ist auch dann, wenn der Winkel α größer als 90° ist, ein sicherer Halt an der Klemmbacke gewährleistet. Allerdings lassen sich auch Werkstücke mit spitzwinkligen Ecken 23 (Winkel α <90°) zwischen den Vorsprüngen sicher halten. Die Ecke 23 ragt dann im Vergleich zu einem rechten Winkel noch etwas weiter in den Freiraum 15 hinein.

Werden also die Klemmbacken 10, die an den Ecken des Werkstücks 20 anliegen, gegeneinander verschoben, so dreht sich das Werkstück, ohne dass der Halt desselben in den Klemmbacken verloren geht. Da die Klemmbacken 10 zumindest in zwei Richtungen (X, Y) parallel zum Werkstücktisch beweglich sind, kann so auch ein in einem Winkel erfolgender Einschubvorgang durchgeführt werden.

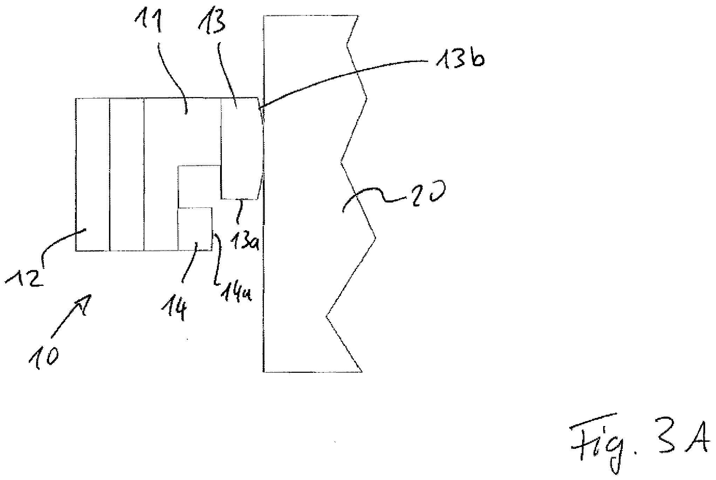

Es ist allerdings nicht zwingend notwendig, hierzu mehr als zwei Klemmbacken 10 zu verwenden. Genauso gut kann eine nicht zwingend als Klemmbacke 10 ausgebildete Werkstückerfassungseinrichtung vorgesehen sein, die einen nicht ebenen Anlagebereich aufweist. Eine solche Werkstückerfassungseinrichtung ist in den Figuren 3A bis 3C dargestellt.

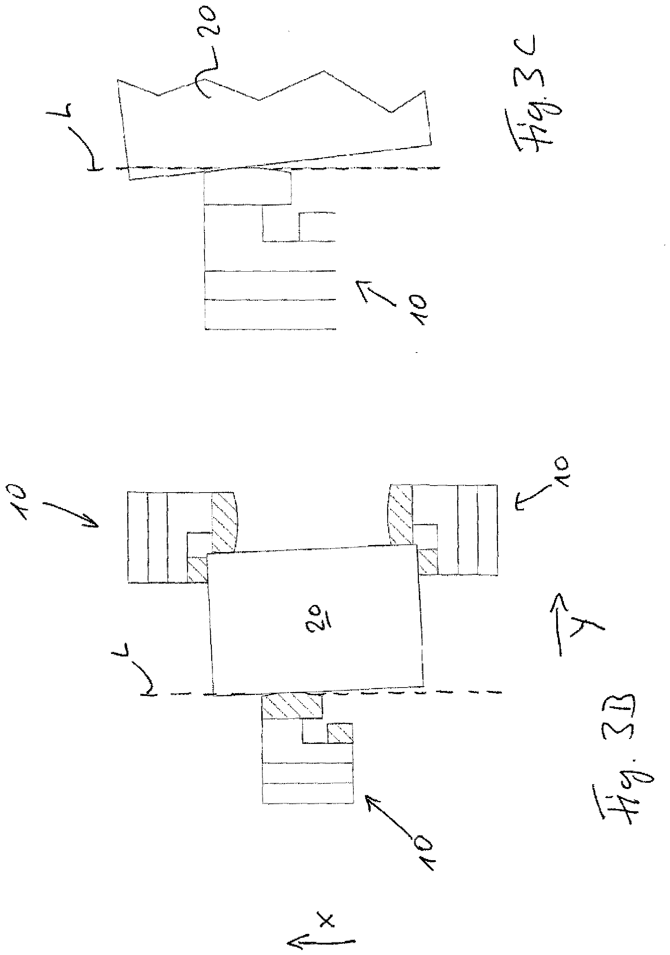

Die in Figur 3A beispielhaft als Klemmbacke 10 dargestellte Werkstückerfassungseinrichtung weist einen Anlagebereich 13b auf, der, wie im Beispiel gezeigt, zur Anlage an einer Schmalseite des Werkstücks 20 ausgebildet ist. Dieser Anlagebereich 13b ist im gezeigten Beispiel zur Schmalseite des Werkstücks hin gewölbt, insbesondere konvex gestaltet. Wichtig ist allerdings lediglich, dass zwischen Anlagebereich 13b und Werkstück 20 eine Anlage erfolgt, die das Drehen des Werkstücks 20 relativ zur Werkstückerfassungseinrichtung ermöglicht, ohne dass dabei die Anlage zum Werkstück 20 verloren geht. In Figur 3B ist gezeigt, wie zwei Klemmbacken auf der rechten Seite in den Eckbereichen des Werkstücks 20 angelegt sind, wie dies zuvor mit Bezug auf die Figuren 2A bis 2D erläutert worden ist. Die Linie L bezeichnet eine Linie, die parallel zur Einschubrichtung X verläuft. Durch Verschiebung der beiden Klemmbacken 10 in Richtung Y relativ zueinander wird das Werkstück 20 gedreht, sodass dessen der linken Klemmbacke zugewandte Schmalseite nicht mehr parallel zur Linie L liegt. Dies wird dadurch ermöglicht, dass die Klemmbacke 10 auf der linken Seite über den eben beschriebenen Anlagebereich 13b verfügt. Diese Situation ist in Figur 3C noch in vergrößerter Form dargestellt. Durch die hier beispielhaft als Wölbung dargestellte Anlagefläche wird eine sichere Anlage der Klemmbacke 10 gegen die Schmalseite des Werkstücks 20 erzeugt.

Die erfindungsgemäße Vorrichtung ermöglicht also auch einen Einschub von Werkstücken, deren Schmalseiten in einem vorgegebenen Winkel zur Einschubrichtung in einer Holzbearbeitungsmaschine eingeschoben werden sollen.

## Patentansprüche

1. Platteneinschubsystem für Holzverarbeitungsmaschinen (2), ausgelegt zum Einschieben von plattenförmigen Werkstücken (20) aus Holz oder Holzersatzstoffen, umfassend:
einen Werkstücktisch (1) mit einer Werkstückablagefläche,
eine Mehrzahl Werkstückerfassungseinrichtungen (10), die dazu ausgelegt sind, das Werkstück (20) zu fassen und auf dem Werkstücktisch (1) in einer Einschubrichtung (X) parallel zur Werkstückablage zu verschieben, wobei wenigstens zwei der Mehrzahl Werkstückerfassungseinrichtungen (10) als Klemmbacken mit jeweils zwei zueinander abgewinkelten Schenkelabschnitten (11, 12) ausgebildet sind, wobei jeder Schenkelabschnitt (11, 12) einen Anlagebereich (13, 14) aufweist, der zur Anlage an die Schmalseite (21, 22) eines plattenförmigen Werkstücks (20) ausgelegt ist, und wobei die Klemmbacken (10) in Einschubrichtung (X) verschieblich gelagert sind, wobei die wenigstens zwei Klemmbacken (10) zusätzlich in eine Querrichtung (Y) quer, insbesondere senkrecht, zur Einschubrichtung (X) und parallel zur Werkstückablage verschieblich sind, **dadurch gekennzeichnet, dass** eine weitere zumindest in Einschubrichtung (X) verschiebliche Werkstückerfassungseinrichtung (10) vorgesehen ist, welche ebenfalls als Klemmbacke mit jeweils zwei zueinander abgewinkelten Schenkelabschnitten (11, 12) ausgebildet ist, wobei jeder Schenkelabschnitt (11, 12) einen Anlagebereich (13, 14) aufweist, der zur Anlage an die Schmalseite (21, 22) des plattenförmigen Werkstücks (20) ausgelegt ist, und/oder die weitere Werkstückerfassungseinrichtung (10) einen Anlageabschnitt (13b) umfasst, der die Anlage einer Schmalseite des Werkstücks (20) in einem Winkel zur Einschubrichtung (X) ermöglicht.

2. Platteneinschubsystem nach Anspruch 1,
**dadurch gekennzeichnet,**
**dass** eine erste Klemmbacke (10) an einer in Einschubrichtung (X) verschieblichen ersten, insbesondere als erstes Portal ausgebildeten, Verschiebeeinrichtung (40) angeordnet ist, insbesondere an der ersten Verschiebeeinrichtung (40) in einer Richtung (Y) quer zur Einschubrichtung (X) verschieblich geführt ist.

3. Platteneinschubsystem nach Anspruch 2,
**dadurch gekennzeichnet,**
**dass** wenigstens eine weitere Klemmbacke (10) an der ersten Verschiebeeinrichtung (40) oder einer von der ersten Verschiebeeinrichtung (40) verschiedenen zweiten in Einschubrichtung (X) verschieblichen, insbesondere als zweites Portal ausgebildeten, Verschiebeeinrichtung (41) angeordnet ist, insbesondere an der zweiten Verschiebeeinrichtung (41) in einer Richtung (Y) quer zur Einschubrichtung (X) verschieblich geführt ist.

4. Platteneinschubsystem nach Anspruch 2 oder 3,
**dadurch gekennzeichnet,**
**dass** wenigstens eine weitere Klemmbacke (10) an einer von der ersten Verschiebeeinrichtung (40) und einer gegebenenfalls vorhandenen zweiten Verschiebeeinrichtung (41) verschiedenen dritten in Einschubrichtung (X) verschieblichen, insbesondere als drittes Portal ausgebildeten, Verschiebeeinrichtung (42) angeordnet ist, insbesondere an der dritten Verschiebeeinrichtung (42) in einer Richtung (Y) quer zur Einschubrichtung (X) verschieblich geführt ist.

5. Platteneinschubsystem nach einem der Ansprüche 2 bis 4,
**dadurch gekennzeichnet,**
**dass** wenigstens eine weitere Klemmbacke (10) an einer sich in Einschubrichtung (X) erstreckenden Führungseinrichtung (50) angeordnet und in Einschubrichtung (X) verschieblich geführt ist.

6. Platteneinschubsystem nach Anspruch 5,
**dadurch gekennzeichnet,**
**dass** die Führungseinrichtung (50) in der Querrichtung (Y) verschieblich gelagert ist.

7. Platteneinschubsystem nach einem der Ansprüche 2 bis 6,
**dadurch gekennzeichnet,**
**dass** eine Mehrzahl Klemmbacken (10) an wenigstens einer der Verschiebeeinrichtungen (40 - 42) und/oder der Führungseinrichtung (50) angeordnet ist.

8. Platteneinschubsystem nach einem der vorigen Ansprüche,
**dadurch gekennzeichnet,**
**dass** der Anlagebereich (13, 14) am ersten und/oder zweiten Schenkelabschnitt der wenigstens einen Klemmbacke (10) oder einer Mehrzahl Klemmbacken (10) aus dem jeweiligen Schenkelabschnitt (11, 12) vorspringend ausgebildet ist.

9. Platteneinschubsystem nach Anspruch 8,
**dadurch gekennzeichnet,**
**dass** der vorspringende Anlagebereich (13, 14) fingerartig ausgebildet ist, wobei wenigstens eine Klemmbacke (10) zwei zueinander in einem Winkel, insbesondere im rechten Winkel, angestellte fingerartige Anlagebereiche aufweist.

10. Platteneinschubsystem nach einem der vorigen Ansprüche,
**dadurch gekennzeichnet,**
**dass** der Anlagebereich (13, 14) am ersten und/oder zweiten Schenkelabschnitt der wenigstens einen Klemmbacke (10) oder einer Mehrzahl Klemmbacken (10) eine nicht ebene, insbesondere gewölbte, Werkstücckontaktfläche (13a, 14a) aufweist.

11. Holzverarbeitungsanlage, mit einer Holzverarbeitungsmaschine (2), insbesondere einer bevorzugt als Kantenbearbeitungsmaschine ausgebildeten Durchlaufmaschine, mit einem Werkstückeingangsbereich und einem dem Werkstückeingangsbereich vorgeschalteten Platteneinschubsystem nach einem der vorigen Ansprüche.

12. Holzverarbeitungsanlage nach Anspruch 11,
**dadurch gekennzeichnet,**
**dass** sie eine Fördervorrichtung, insbesondere ein Kettenband (3), umfasst, welche das Werkstück (20) in Einschubrichtung (X) fördert und sich über den Werkstücktisch (1) wenigstens bis zum Werkstückeingangsbereich der Holzverarbeitungsmaschine (2) oder bis in die Holzverarbeitungsmaschine (2) hinein erstreckt.

## Claims

1. Plate insertion system for wood processing machines (2), designed for inserting plate-type workpieces (20) of wood or wood substitutes, comprising:
a workpiece table (1) with a workpiece shelf surface,
a plurality of workpiece gripping devices (10) which are designed to grip the workpiece (20) and move it on the workpiece table (1) in an insertion direction (X) parallel to the workpiece shelf, wherein at least two of the plurality of workpiece gripping devices (10) are configured as clamping jaws each with two limb portions (11, 12) which are angled towards one another, wherein each limb portion (11, 12) has a contact bearing region (13, 14) which is designed for bearing against the narrow side (21, 22) of a plate-type workpiece (20), and wherein the clamping jaws (10) are mounted for displacement in the insertion direction (X), wherein the at least two clamping jaws (10) are additionally displaceable in a transverse direction (Y) transversely, in particular, perpendicularly, to the insertion direction (X) and parallel to the workpiece shelf, **characterised in that** a further workpiece gripping device (10) is provided which is displaceable at least in the insertion direction (X) and is likewise configured as a clamping jaw with in each case two limb portions (11, 12) which are angled towards one another, wherein each limb portion (11, 12) has a contact bearing region (13, 14) which is designed for bearing against the narrow side (21, 22) of the plate-type workpiece (20), and/or the further workpiece gripping device (10) comprises a contact bearing section (13b) which enables a narrow side of the workpiece (20) to bear at an angle to the insertion direction (X).

2. Plate insertion system according to claim 1, **characterised in that** a first clamping jaw (10) is arranged on a first displacement unit, in particular configured as a first portal, displaceable in the insertion direction (X), in particular is guided in displaceable manner on the first displacement unit (30) in a direction (Y) transversely to the insertion direction (X).

3. Plate insertion system according to claim 2 **characterised in that** at least one further clamping jaw (10) is arranged on the first displacement unit (40) or on a second displacement unit (41), different from the first displacement unit (40), but displaceable in the insertion direction (X) and in particular configured as a second portal, in particular is guided in displaceable manner on the second displacement unit (41) in a direction (Y) transversely to the insertion direction (X).

4. Plate insertion system according to claim 2 or 3 **characterised in that** at least a further clamping jaw (10) is arranged on third displacement unit (42), configured in particular as a third portal, displaceable in the insertion direction (X) and different from the first displacement unit (40) and from a second displacement unit (41), where this is provided, and in particular is guided in displaceable manner on the third displacement unit (42) in a direction (Y) transversely to the insertion direction (X).

5. Plate insertion system according to one of claims 2 to 4 **characterised in that** at least a further clamping jaw (10 is arranged on a guiding device (50), extending in the insertion direction (X), and is guided in displaceable manner in the insertion direction (X).

6. Plate insertion system according to claim 5 **characterised in that** the guiding device (50) is mounted in displaceable manner in the transverse direction.

7. Plate insertion system according to one of claims 2 to 6 **characterised in that** a plurality of clamping jaws (10) is arranged on at least one of the displacement units (40-42) and/or the guiding device (50).

8. Plate insertion system according to one of the preceding claims **characterised in that** the contact bearing region (13, 14) on the first and/or second limb portion of the at least one clamping jaw (10) or a plurality of clamping jaws (10) is configured to project out from the respective limb portion (11, 12).

9. Plate insertion system according to claim 8 **characterised in that** the projecting contact bearing region (13, 14) is of a finger-shaped design wherein at least one clamping jaw (10) has two finger-shaped contact bearing regions which are set at an angle, in particular at a right angle, to one another.

10. Plate insertion system according to one of the preceding claims **characterised in that** the contact bearing region (13, 14) has on the first and/or second limb portion of the at least one clamping jaw (10) and/or a plurality of clamping jaws (10) a non-planar, in particular a curved, workpiece contact surface (13a 14a).

11. Wood processing system with a wood processing machine (2), in particular a continuous through-flow machine, preferably designed as an edge processing machine, with a workpiece entry region and a plate insertion system according to one of the preceding claims connected in upstream of the workpiece entry region.

12. Wood processing system according to claim 11, **characterised in that** it comprises a conveying device, in particular a chain belt (3), which conveys the workpiece (20) in the insertion direction (X) and extends over the workpiece table (1) at least up to the workpiece entry region of the wood processing machine (2) or into the wood processing machine (2).

## Revendications

1. Système d'insertion de plaques, conçu pour machines de traitement du bois (2) pour l'insertion de pièces à usiner (20) en forme de plaques en bois ou en matériaux de remplacement du bois, comprenant :
une table porte-plaque travail (1) avec une surface de dépose pour les pièces à usiner,
une pluralité de dispositifs de manipulation de pièces à usiner (10), lesquels sont conçus pour saisir la pièce à usiner (20) et la déplacer sur la table porte-pièce (1) en translation dans une direction d'insertion (X), parallèlement à la dépose de pièce à usiner, sachant qu'au moins deux de la pluralité de dispositifs de manipulation de pièces à usiner (10) sont réalisés en forme de mâchoires de préhension comprenant chacune deux parties de branche (11, 12) coudées l'une vers l'autre, chacune des parties de branche (11, 12) présentant une face d'appui (13, 14), qui est destinée à être appliquée contre le côté étroit (21, 22) d'une pièce à usiner en forme de plaque (20), et sachant que les mâchoire de préhension (10) sont montées, mobiles en translation dans la direction d'insertion (X), les au moins deux mâchoires de préhension (10) pouvant être déplacées en outre dans une direction transversale (Y), transversalement, en particulier perpendiculairement, par rapport à la direction d'insertion (X) et parallèlement à la dépose de pièce à usiner,
**caractérisé en ce**
**qu'**est prévu un autre dispositif de manipulation de pièces à usiner (10) mobile en translation dans la direction d'insertion (X), qui est également réalisé en forme de mâchoires de préhension présentant chacune deux parties de branche (11, 12) coudées l'une vers l'autre, sachant que chaque partie de branche (11, 12) présente une section d'appui (13, 14), qui est conçue pour être appliquée contre le côté étroit (21, 22) de la pièce à usiner (20), et / ou que l'autre dispositif de manipulation de pièces à usiner (10) comprend une section d'appui (13b), qui permet l'application d'un côté étroit de la pièce à usiner (20) en formant un angle par rapport à la direction d'insertion (X).

2. Système d'insertion de plaques selon la revendication 1,
**caractérisé en ce que**,
sur une première installation de déplacement (40) mobile en translation dans la direction d'insertion (X), réalisée en particulier sous la forme d'un premier portique, une première mâchoire de préhension (10) est disposée, en particulier guidée en translation sur la première installation de déplacement (40) dans une direction (Y), transversalement par rapport à la direction d'insertion (X).

3. Système d'insertion de plaques selon la revendication 2,
**caractérisé en ce que**,
sur la première installation de déplacement (40) ou sur une deuxième installation de déplacement (41) différente de la première installation de déplacement (40), mobile en translation dans la direction d'insertion (X), réalisée en particulier en tant que deuxième portique, au moins une autre mâchoire de préhension (10) est disposée, en particulier guidée en translation sur la deuxième installation de déplacement (41) dans une direction (Y), transversalement par rapport à la direction d'insertion (X) .

4. Système d'insertion de plaques selon revendication 2 ou 3,
**caractérisé en ce que**,
sur une troisième installation de déplacement (42) différente de la première installation de déplacement (40) et d'une deuxième installation de déplacement (41) prévue le cas échéant, mobile en translation dans la direction d'insertion (X), réalisée, en particulier, en tant que troisième portique, au moins une autre mâchoire de préhension (10) est disposée, en particulier guidée en translation sur la troisième installation de déplacement (42) dans une direction (Y), transversalement par rapport à la direction d'insertion (X).

5. Système d'insertion de plaques selon l'une des revendications 2 à 4,
**caractérisé en ce qu'**
au moins une autre mâchoire de préhension (10) est disposée sur un dispositif de guidage (50) s'étendant dans la direction d'insertion (X) et est guidée en translation dans la direction d'insertion (X).

6. Système d'insertion de plaques selon la revendication 5,
**caractérisé en ce que**
le dispositif de guidage (50) est monté, mobile en translation dans la direction transversale (Y).

7. Système d'insertion de plaques selon l'une des revendications 2 à 6,
**caractérisé en ce que**
plusieurs mâchoires de préhension (10) sont disposées sur au moins l'une des installations de déplacement (40 - 42) et / ou sur le dispositif de guidage (50).

8. Système d'insertion de plaques selon l'une des revendications précédentes,
**caractérisé en ce que**
la section d'appui (13, 14) est formée en saillie de la partie de branche (11, 12) respective, sur la première et / ou la deuxième partie de branche de l'au moins une mâchoire de préhension (10) ou d'une pluralité de mâchoires de préhension (10).

9. Système d'insertion de plaques selon la revendication 8,
**caractérisé en ce que**
la section d'appui (13, 14) faisant saillie est réalisée à la manière d'un doigt, sachant qu'au moins une mâchoire de préhension (10) présente deux sections d'appui genre doigts agencées l'une vers l'autre en formant un angle, en particulier un angle droit.

10. Système d'insertion de plaques selon l'une des revendications précédentes,
**caractérisé en ce que**
la section d'appui (13, 14) de la première et / ou deuxième partie de branche de l'au moins une mâchoire de préhension (10) ou d'une pluralité de mâchoires de préhension (10) présente une face d'appui de pièce à usiner (13a, 14a) non plane, en particulier voûtée.

11. Installation de traitement du bois, avec une machine de traitement du bois (2), en particulier une machine de traitement en continu, réalisée de préférence en forme de machine de traitement de bords, avec une zone d'entrée de pièces à usiner et un système d'insertion de plaques selon l'une des revendications précédentes, connecté en amont de la zone d'entrée de pièces à usiner.

12. Installation de traitement du bois selon la revendication 11,
**caractérisée en ce**
**qu'**elle comprend un dispositif de transport, en particulier une bande à une chaîne (3), qui transporte la pièce a usiner (20) dans la direction d'insertion (X) et qui s'étend sur la table porte-pièce (1) au moins jusqu'à la zone d'entrée de pièces à usiner de la machine de traitement du bois (2) ou jusque dans la machine de traitement du bois (2).
